# EUROPÄISCHE PATENTSCHRIFT

(11) **EP 1 911 662 B1**
(45) Veröffentlichungstag und Bekanntmachung des Hinweises auf die Patenterteilung: **25.01.2012**
(21) Anmeldenummer: 08000428.6
(22) Anmeldetag: 23.03.2001
(51) Int. Cl.: B62D 25/20

(54) **Fahrzeugkarosserieboden und Plattformsysstem**
Vehicle body base and a platform system
Fond de caisse d'un véhicule et système de plate-forme

(30) Priorität: 24.03.2000 DE 10014837
(43) Veröffentlichungstag der Anmeldung: 16.04.2008
(62) Teilanmeldung aus: 01929260.6
(73) Patentinhaber: GM Global Technology Operations LLC, Detroit, MI 48265-3000 (US)
(72) Erfinder: Bechtold, Ralf-Dieter, 55278 Weinolsheim (DE); Hoffmann, Georg, 55286 Wörrstadt (DE); Brandt, John, 65428 Rüsselsheim (DE); Görg, Christian Andreas, 85247 Schwabhausen (DE); Anders, Michael, 65468 Trebur (DE)
(74) Vertreter: Strauss, Peter

(56) Entgegenhaltungen:
- EP-A- 0 455 279
- DE-A- 2 610 299
- US-A- 5 549 349
- PATENT ABSTRACTS OF JAPAN Bd. 007, Nr. 237 (M-250), 21. Oktober 1983 (1983-10-21) -& JP 58 126263 A (NISSAN JIDOSHA KK), 27. Juli 1983 (1983-07-27)
- PATENT ABSTRACTS OF JAPAN Bd. 010, Nr. 231 (M-506), 12. August 1986 (1986-08-12) -& JP 61 064587 A (MAZDA MOTOR CORP), 2. April 1986 (1986-04-02)

## Beschreibung

Die Erfindung bezieht sich auf ein Plattformsystem gemäß dem Oberbegriff des Anspruchs 1. Ein derartiges Plattformsystem für sich im Radstand unterscheidende Fahrzeuge ist ist aus der DE 261 0 299 A bekannt.

Typischerweise besteht ein solcher Boden aus einer vorderen Bodenplatte unterhalb des Fahrgastbereiches und einer hinteren Bodenplatte unterhalb des Kofferraums. Die hintere Platte liegt dabei etwas höher als die vordere Platte, da unter jener die Fahrzeughinterachse untergebracht werden muss. Der Abstand zwischen der vorderen und der hinteren Bodenplatte wird durch eine Schließwand geschlossen, die üblicherweise einteilig mit der hinteren Bodenplatte ausgeführt ist.

Häufig ist der vordere Teil der hinteren Bodenplatte zur Aufnahme einer Rücksitzbank ausgebildet. Vor allem aus diesem Grund ergibt sich die Notwendigkeit, diesem Bereich eine ausreichende Quersteifigkeit zu verleihen, damit bei einem Seitenaufprall die Fahrgastzelle möglichst wenig eingedrückt wird und die Insassen vor Verletzungen geschützt werden. Dieser Bereich wird daher durch ein L-förmiges Verstärkungsprofil mit einem Horizontal- und einem Vertikalabschnitt versteift, das sich unterhalb der hinteren Bodenplatte quer zur Fahrzeuglängsachse erstreckt und diese zu einem kastenförmigen Gebilde komplettiert, das in der Lage ist, die bei einem Seitenaufprall auftretenden Querkräfte abzustützen.

Es wurde auch schon vorgeschlagen, das Verstärkungsprofil einteilig mit der vorderen Bodenplatte auszuführen. Eine solche Vorgehensweise kann z. B. der DE 38 13 455 C2 sowie der EP 0 297 057 A1 entnommen werden.

Des Weiteren bezieht sich die Erfindung auf ein Plattformsystem. Die Automobilindustrie beschäftigt sich schon seit einiger Zeit im Rahmen der sogenannten Plattformstrategie mit der Frage, wie Fahrzeuge mit unterschiedlichen Radständen aus sich gleichenden Karosserieteilen zusammengesetzt werden können. In diesem Zusammenhang wurde schon vorgeschlagen, die vordere und die hintere Bodenplatte jeweils unverändert zu lassen und z. B. über unterschiedlich breite Blechstreifen miteinander zu verbinden. Dieser Vorschlag kann der schon genannten EP 0 297 057 entnommen werden. Außerdem wird in der EP 455 279 B1 angeregt, die Schließwand getrennt von der vorderen sowie der hinteren Bodenplatte auszuführen und ihre Querschnittsform der jeweils gewünschten Fahrzeuggröße anzupassen. Durch eine entsprechende Faltung der Schließwand wird erreicht, dass sich die jeweils zugewandten Enden der vorderen und der hinteren Platten entweder überlappen oder auf Abstand gehalten werden, wodurch sich unterschiedliche Längen des gesamten Karosseriebodens ergeben.

In der DE 197 22 139 A1 wird vorgeschlagen, die vordere Bodenplatte so zu gestalten, dass lediglich durch eine leichte Veränderung des Presswerkzeuges eine verlängerte Version erstellt werden kann.

Die Erfindung beruht somit auf der Aufgabe, den Karosserieboden so zu gestalten, dass ohne großen Aufwand eine gegebene Form auf ein Fahrzeug mit größerem Radstand übertragen werden kann und dass diese Karosserie insbesondere im Bereich des Übergangs vom vorderen zum hinteren Teil eine ausreichende Quersteifigkeit erhält.

Gemäß der Erfindung wird dazu ein Plattformsystem mit den im Anspruch 1 definierten Merkmalen vorgeschlagen.

Mit einer derartigen Ausgestaltung des Fahrzeugbodens wird erreicht, dass dieser in äußerst effektiver Weise an unterschiedliche Radstände angepasst werden kann. Lediglich das Verstärkungsprofil muss geändert werden, indem der Verlängerungsabschnitt je nach gewünschtem Radstand entsprechend lang ausgeführt wird. Die Werkzeuge zur Herstellung der vorderen und der hinteren Bodenplatte können beibehalten werden. Gleichzeitig wird mit dieser Ausführung erreicht, dass die bewährte kastenförmige Querverstärkung im Übergangsbereich zwischen den beiden Bodenplatten erhalten bleibt.

Üblicherweise weist die vordere Bodenplatte einen sogenannten Mitteltunnel auf. Dies ist eine im Querschnitt U-förmige nach oben gerichtete Ausdrückung in der vorderen Platte, die sich entlang der zentralen Längsachse des Fahrzeuges erstreckt. Die nach unten offene Seite des Tunnels wird häufig durch eine Verschlussplatte geschlossen, so dass sich eine aerodynamisch günstige untere Bodenplattenseite ergibt. Durch das so gebildete Hohlprofil kann z. B. das Auspuffrohr geführt werden. Außerdem dient der Mitteltunnel dazu, die Bodenplatte in sich zu versteifen.

Um auch den Mitteltunnel zu verlängern, weist der Verlängerungsabschnitt ein Tunnelelement mit einem Bogenabschnitt auf, der mit einem mit dem Mitteltunnel korrespondierenden U-förmigen Querschnitt versehen ist.

Der Bogenabschnitt bildet somit die Verlängerung des Mitteltunnels.

Die Anbindung des Tunnelelementes an das Verstärkungsprofil und die Schließwand kann auf verschiedene Weisen gestaltet werden.

Eine erste Ausführung sieht vor, dass das der rückwärtige Abschluss des Tunnelelements in den Vertikalabschnitt des Verstärkungsprofils übergeht, wobei vorzugsweise zwischen dem Bogenabschnitt und dem Vertikalabschnitt ein sattelförmiger Bereich ausgebildet ist.

Die Schließwand weist dazu einen Ausschnitt auf, durch den das Tunnelelement hindurchgeführt ist, um die Verbindung zum Vertikalabschnitt des Verstärkungsprofils aufnehmen zu können. Bei dieser Ausführung wird das Verstärkungsprofil aus mindestens zwei Teilen gebildet, wobei ein erstes Einzelteil vom Tunnelelement, d. h. vom Bogenabschnitt und der einen Flanke des Sattels gebildet wird. Bei den Einzelteilen, die den restlichen Abschnitten des Verstärkungsprofils bilden, handelt es sich vorzugsweise um zwei bezüglich der Mittellängsachse des Karosseriebodens symmetrisch ausgeformte Einzelteile mit jeweils einem Horizontal- und einem Vertikalabschnitt.

Im Bereich des Mitteltunnels ist der Querschnitt des Verstärkungskastens kleiner als in den Seitenbereichen, da dort noch ein wenig Platz gelassen werden muss, um die durch den Mitteltunnel geführten Elemente unter die hintere Bodenplatte führen zu können: Um auch in diesem Bereich eine ausreichende Steifigkeit zu erhalten, kann es notwendig werden, Verstärkungselemente, vorzugsweise in Form von zusätzlichen Blechen, über den Tunnelquerschnitt zu spannen.

Um einen möglichst großen Querschnitt des Verstärkungskastens auch im Bereich des Mitteltunnels zu erreichen, wird folgende Vorgehensweise vorgeschlagen: Das Tunnelelement weist dazu einen Bogenabschnitt mit einem gleichbleibenden U-förmigen Querschnitt auf, der mit seiner hinteren Kante gegen die Schließwand gesetzt ist, wobei ein Teilabschnitt dieser Wand in den Querschnitt hineinragt. Dazu ist das Tunnelelement als Einzelteil ausgebildet, das an seinem hinteren Ende mit Flanschen versehen ist, die gegen die Schließwand gesetzt sind und dort mit dieser verschweißt oder anderweitig verbunden sind, wobei im Verlängerungsabschnitt des Verstärkungsprofis eine Aussparung unter dem Tunnelelement vorgesehen ist.

Der Vertikalabschnitt des Verstärkungsprofils ist auch im Tunnelbereich mit der unteren Kante der Schließwand verbunden, so dass auch hier der Verstärkungskasten im Querschnitt geschlossenen ist.

Vorzugsweise überdeckt der Teilabschnitt der Schließwand, der sich im Querschnitt des Tunnels befindet, die Querschnittsfläche nicht ganz ab, so dass ein unterer Ausschnitt verbleibt, durch den die im Mitteltunnel angeordneten Teile in den Bereich unterhalb der hinteren Bodenplatte geführt werden.

Im Folgenden soll die Erfindung anhand zweier Ausführungsbeispiele näher erläutert werden. Dazu zeigen:
- Fig. 1: eine prinzipielle Darstellung der Erfindung in drei Einzelbilder a, b, c;
- Fig. 2: ein Verstärkungsprofil gemäß einer ersten Ausführungsform;
- Fig. 3: die Anbindung des Verstärkungsprofils nach Fig. 2 an einen Seitenschweller und die Verbindung mit einer hinteren Bodenplatte;
- Fig. 4: in Explosionsdarstellung einen Fahrzeugboden mit einem Verstärkungsprofil gemäß einer zweiten Ausführung und
- Fig. 5: einen Querschnitt entlang der Linie V-V der Fig. 4.

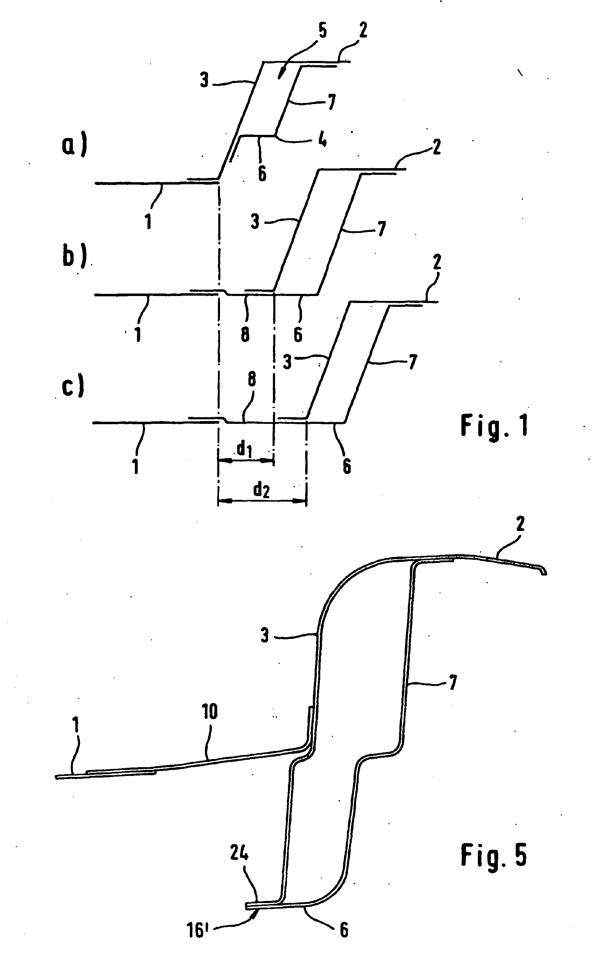

Zunächst wird auf die Fig. 1 (Teilbild a) Bezug genommen. Diese zeigt in einer Prinzipdarstellung den Längsschnitt durch einen Fahrzeugboden. Dieser besteht aus einer vorderen Bodenplatte 1 und einer hinteren Bodenplatte 2, die in der Höhe versetzt gegeneinander angeordnet sind, wobei der Höhenabstand zwischen den beiden Bodenplatten durch eine Schließwand 3, die einstückig mit der hinteren Bodenplatte ausgeführt ist, überbrückt wird. Unterhalb der hinteren Bodenplatte 2 erstreckt sich in Querrichtung ein L-förmiges Verstärkungsprofils 4 mit einem sich im Wesentlichen parallel zur Schließwand 3 erstreckenden Vertikalabschnitt 7 und einem dazu in etwa senkrecht oder senkrecht verlaufenden Horizontalabschnitt 6, wobei das Verstärkungsprofil 4 derart mit der Bodenplatte 2 und der Schließwand 3 verbunden ist, dass ein sich in Querrichtung des Fahrzeugs erstreckender Verstärkungskasten 5 ergibt.

Um Fahrzeuge mit verschiedenen Radabständen darstellen und dabei die vordere und die hintere Bodenplatte in ihrer Form beibehalten zu können, wird zwischen den beiden Platten 1, 2 ein Verlängerungselement (Teilbild b) gesetzt, das sich als Verlängerung des Horizontalabschnittes 6 in einen Verlängerungsabschnitt 8 darstellt. Dazu ist das L-förmige Verstärkungsprofil 4 ein wenig vergrößert, so dass der Horizontalabschnitt 6 unter die untere Kante der Schließwand 3 geführt werden kann. Die vordere Kante des Verlängerungsabschnittes 8 überlappt mit der vorderen Bodenplatte 1 und wird mit dieser verbunden. Bei einer Ausführung der Karosserieelemente in Stahl werden die Teile üblicherweise miteinander verschweißt. Diese Schweißnaht verläuft im Abstand zur Schließwand 3. Je nachdem wie groß der Abstand zwischen den beiden Platten 1 und 2 sein soll, wird die Längsausdehnung des Verlängerungsabschnitts bestimmt. Je nach Ausführung stellen sich die Verlängerungen d₁ bzw. d₂ ein, die jeweils mit bestimmten Radständen verknüpft sind (Teilbild b bzw. c).

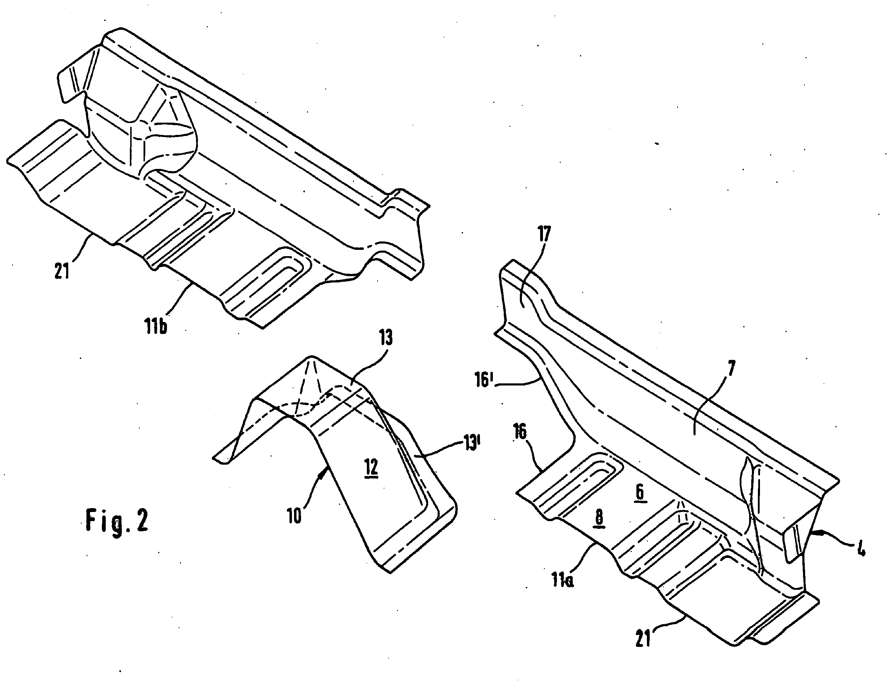

Fig. 2 zeigt eine erste Ausführungsform des Verstärkungsprofils 4. Dieses besteht aus drei Einzelteilen, nämlich einem Tunnelelement 10 sowie zwei symmetrisch zueinander ausgebildeten Profilelementen 11a, 11b. Das Tunnelelement 10 besteht aus einem Bogenabschnitt 12, der im Querschnitt einem Mitteltunnel in der vorderen Bodenplatte entspricht und damit eine Verlängerung diese Tunnels darstellt. Die vordere Querschnittsfläche des Bogenelementes 12 ist frei, während die hintere Querschnittsfläche im oberen Bereich durch eine Abschlussblech 13 verdeckt ist, das eine U-förmige Aussparung 13' freilässt, deren Querschnittsfläche damit kleiner ist als die im Bogenabschnitt 12.

Die beiden symmetrisch zueinander ausgebildeten Profilelemente 11a, 11b weisen jeweils einen Horizontalabschnitt 6, einen Vertikalabschnitt 7 und einen Verlängerungsabschnitt 8 auf. Zusammengesetzt weisen sie im Bereich des Horizontalabschnittes eine Aussparung 16 auf, die vom Bogenabschnitt 12 des Tunnelelementes 10 überspannt wird. Auch der Vertikalabschnitt 7 weist eine Aussparung 16' auf, die der Aussparung 13' im Abschlussblech 13 entspricht. Setzt man die Elemente zusammen, so bildet sich zwischen dem Abschlussblech 13 und dem Horizontalabschnitt 6 ein Sattel 17 aus.

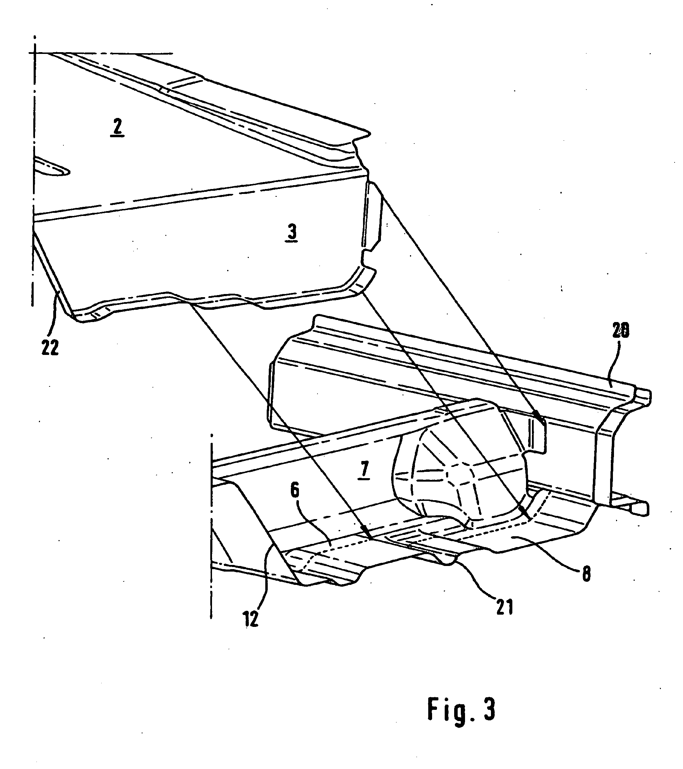

Fig. 3 zeigt die Einpassung des zusammengesetzten Verstärkungsprofils 4 in die Fahrzeugkarosserie. Die Seitenkanten schließen jeweils an einen Seitenschweller 20 an, wobei in der Fig. 3 lediglich die linke Fahrzeugseite dargestellt ist. Die vorderen Kanten 21 des Verlängerungsabschnittes 8 und des Tunnelelements 10 werden mit der vorderen Bodenplatte 2 verbunden. Wie die Fig. 3 weiterhin zeigt, wird auf diese Anordnung die hintere Bodenplatte 2 mit der Schließwand 3 aufgesetzt, wobei die Schließwand 3 einen Ausschnitt 22 aufweist, die den Bogenabschnitt 12 des Tunnelelementes 10 umfasst und einschließt.

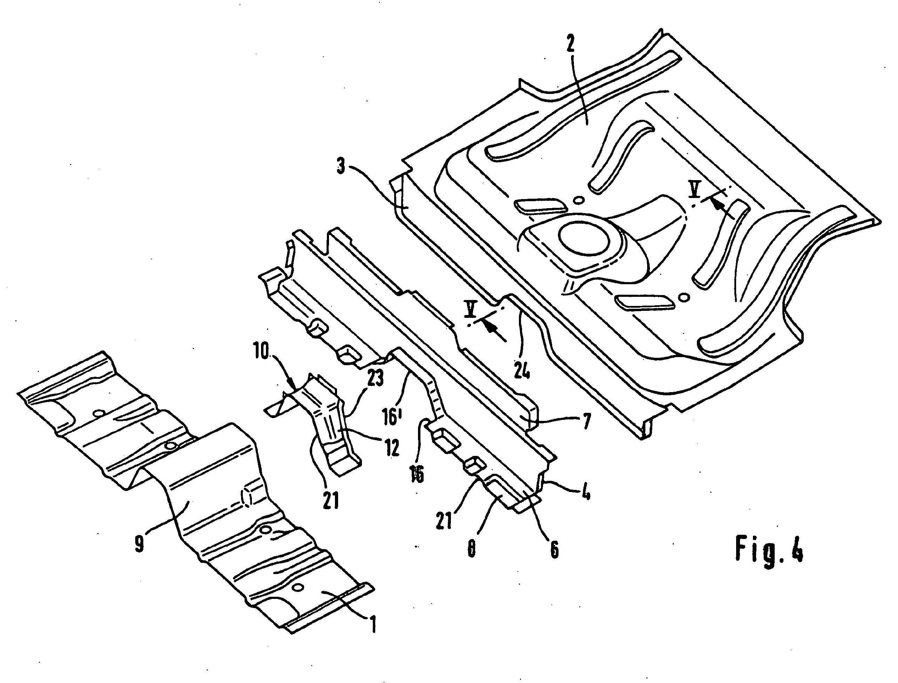

Fig. 4 zeigt eine etwas andere Ausführungsform der Erfindung. Das Tunnelelement 10 besteht lediglich aus einem Bogenabschnitt 12 mit einem im Wesentlichen gleichbleibenden Querschnitt. Die hintere Kante 23 wird mit der Schließwand 3 verbunden. Das Verstärkungsprofil 4 besteht aus einem Einzelteil, das wiederum einen Horizontalabschnitt 6 einen Vertikalabschnitt 7 und einen Verlängerungsabschnitt 8 aufweist, wobei im Horizontalabschnitt ebenfalls eine Aussparung 16 verbleibt, die vom Bogenabschnitt 12 überspannt wird. Auch im Vertikalabschnitt 7 befindet sich eine Aussparung 16', deren U-förmiger Querschnitt kleiner ist als der des Bogenabschnittes 12 und die mit einem entsprechenden Ausschnitt 24 in der Schließwand 3 korrespondiert. Wenn das Verstärkungsprofil 4 und die hintere Bodenplatte 2 mit der Schließwand 3 zusammengesetzt werden, ergibt sich ein im Querschnitt geschlossener Verstärkungskasten, dessen Querschnittsfläche in den Seitenbereichen etwas größer ist als die in einer gedachten Verlängerung des Mitteltunnels 9.

Das Tunnelelement 10 stößt mit seiner hinteren Kante 23 gegen die Schließwand 3 und wird dort mit ihr verschweißt. Die vordere Kanten 21 des Horizontalabschnittes sowie des Tunnelelementes 10 verlaufen dann in einer Horizontalebene und können mit der entsprechenden Kante der vorderen Bodenplatte 1 bzw. Mitteltunnel 9 überlappend verbunden werden.

Fig. 5 zeigt zur Verdeutlichung einen Querschnitt entlang der Linie v-v. Im Bereich des Mitteltunnels bzw. des Bogenabschnittes 12 des Tunnelelementes 10 ist der Querschnitt des Verstärkungskastens zwar gegenüber den Seitenbereichen verkleinert, aber aufgrund der gewählten Konstruktion doch so groß, dass der untere Abschnitt in den Querschnitt des Mitteltunnels 9 hineinragt.

### Bezugszeichenliste: (wird nicht eingereicht)

- 1: Bodenplatte
- 2: Bodenplatte
- 3: Schließwand
- 4: Verstärkungsprofil
- 5: Verstärkungskasten
- 6: Horizontalabschnitt
- 7: Vertikalabschnitt
- 8: Verlängerungsabschnitt
- 9: Mitteltunnel
- 10: Tunnelelement
- 11a: Profilelement
- 11b: Profilelement
- 12: Bogenabschnitt
- 13: Abschlussblech
- 13': Aussparung
- 16: Aussparung
- 16': Aussparung
- 17: Sattel
- 20: Seitenschweller
- 21: Kante
- 22: Ausschnitt
- 23: Kante
- 24: Ausschnitt

## Patentansprüche

1. Plattformsystem für sich im Radstand unterscheidende und jeweils einen Fahrzeugkarosserieboden aufweisende Fahrzeuge, der für jedes Fahrzeug eine im Wesentlichen gleiche vordere und hintere Bodenplatte (1, 2) hat, wobei die hintere höher liegt als die vordere Bodenplatte und an der hinteren Bodenplatten (2) sich einstückig eine in etwa vertikal verlaufende Schließwand (3) anschließt, um den Abstand zwischen den Platten (1, 2) zu überbrücken, **dadurch gekennzeichnet, dass** ein
sich quer erstreckendes L-förmiges Verstärkungsprofil (4) unterhalb der hinteren Bodenplatte (2) mit einem sich im Wesentlichen parallel zur Schließwand (3) erstreckenden Vertikalabschnitt (7) und einem Horizontalabschnitt (6) vorgesehen ist,
wobei das Verstärkungsprofil (4) derart mit der hinteren Bodenplatte (2) und der Schließwand (3) verbunden ist, dass ein sich in Querrichtung des Fahrzeuges erstreckender Verstärkungskasten (5) entsteht,
wobei der Horizontalabschnitt (6) in einen Verlängerungsabschnitt (8) übergeht, der über die Schließwand (3) nach vorne hinausragt und entlang seiner vorderen Kante (21) mit der vorderen Bodenplatte (1) verbunden ist,
wobei die Verbindungslinie im Abstand zur Schließwand (3) verläuft,
und dass der Verlängerungsabschnitt (8) des Verstärkungsprofils (4) bezogen auf seine Ausdehnung gemessen in Längsrichtung dem Radstand des jeweiligen Fahrzeuges angepasst ist.

2. Plattformsystem nach Anspruch 1, **dadurch gekennzeichnet, dass**
die vordere Bodenplatte (1) einen Mitteltunnel (9) aufweist und der Verlängerungsabschnitt (8) mit einem einen Bogenabschnitt (12) aufweisenden Tunnelelement (10) versehen ist,
der Querschnitt des Mitteltunnels (9) mit dem Querschnitt des Bogenabschnittes (12) übereinstimmt, so dass der Bogenabschnitt (12) eine Verlängerung des Mitteltunnels (9) bildet und der rückwärtige Abschluss des Tunnelelements (10) in den Vertikalabschnitt (7) des Verstärkungsprofils (4) übergeht, und
zwischen dem Bogenabschnitt (12) des Tunnelelements (10) und dem Vertikalabschnitt (7) des Verstärkungsprofils ein Sattel (17) im Tunnelelement (10) gebildet ist.

3. Plattformsystem nach Anspruch 2, **dadurch gekennzeichnet, dass** die Schließwand (3) einen Ausschnitt (22) aufweist, in den der Bogenabschnitt (12) des Tunnelelementes (10) eingepasst ist.

4. Plattformsystem nach Anspruch 3, **dadurch gekennzeichnet, dass** das Verstärkungsprofil (4) aus mindestens zwei Teilen besteht, wobei ein erstes Teil vom Tunnelelement (10) gebildet ist, das aus dem Bogenabschnitt (12) und einer Flanke des Sattels (17) besteht.

5. Plattformsystem nach Anspruch 4, **dadurch gekennzeichnet, dass** der Abschnitt des Verstärkungsprofils (4), der nicht vom Tunnelelement (10) gebildet ist, aus zwei im Wesentlichen zur Längsachse des Karosseriebodens spiegelsymmetrischen Profilelementen (11a, 11b) zusammengesetzt ist.

6. Plattformsystem nach Anspruch 2, **dadurch gekennzeichnet, dass**
die vordere Bodenplatte (1) einen Mitteltunnel (9) aufweist und der Verlängerungsabschnitt (8) mit einem einen Bogenabschnitt (12) aufweisenden Tunnelelement (10) versehen ist,
der Querschnitt des Mitteltunnels (9) mit dem Querschnitt des Bogenabschnittes (10) übereinstimmt, so dass der Bogenabschnitt (12) eine Verlängerung des Mitteltunnels (9) bildet, und
der Bogenabschnitt (12) des Tunnelelements (10) einen U-förmigen Querschnitt aufweist, der gegen die Schließwand (3) gesetzt ist, wobei ein Teilstück der Schließwand (3) den oberen Teil der Querschnittsfläche des Bogenabschnittes (12) überdeckt.

7. Plattformsystem nach Anspruch 6, **dadurch gekennzeichnet, dass** das Tunnelelement (10) als Einzelteil ausgebildet ist und einen über seine Länge im Wesentlichen gleichbleibenden Querschnitt aufweist und an seinen hinteren Enden mit Flanschen versehen ist, die gegen die Schließwand (3) gesetzt sind.

8. Plattformsystem nach Anspruch 7, **dadurch gekennzeichnet, dass** der Verstärkungskasten (5) in einer gedachten Verlängerung des Mitteltunnels einen geschlossenen Querschnitt aufweist, wobei der untere Bereich des Kastens den oberen Teil der Querschnittsfläche des Bogenabschnittes (12) überdeckt.

9. Plattformsystem nach Anspruch 8, **dadurch gekennzeichnet, dass** der Vertikalabschnitt (7) in einer gedachten Verlängerung des Mitteltunnels eine U-förmige Aussparung (16') aufweist, die in einen entsprechenden Ausschnitt (24) in der Schließwand (3) eingepasst ist.

## Claims

1. A platform system for vehicles differing in their wheelbase and respectively having a vehicle body floor, which comprises a substantially similar front and rear base plate (1, 2) for each vehicle, with the rear one being disposed at a higher level than the front base plate, and an approximately vertically extending closing wall (3) being connected integrally to the rear base plate (2) in order to bridge the distance between the plates (1, 2), **characterized in that** a transversely extending L-shaped reinforcing profile (4) is provided beneath the rear base plate (2) with a vertical section (7) extending substantially parallel to the closing wall (3) and a horizontal section (6), with the reinforcing profile (4) being connected with the rear base plate (2) and the closing wall (3) in such a way that a reinforcing box (5) is produced which extends in the transverse direction of the vehicle, with the horizontal section (6) converging into an extended section (8) which protrudes beyond the closing wall (3) to the front and is connected along its front edge (21) with the front base plate (1), with the connecting line extending at a distance to the closing wall (3), and that the extended section (8) of the reinforcing profile (4) is adjusted with respect to its extension as measured in the longitudinal direction to the wheelbase of the respective vehicle.

2. A platform system according to claim 1, **characterized in that** the front base plate (1) comprises a central tunnel (9) and the extended section (8) is provided with a tunnel element (10) comprising a curved section (12), the cross section of the central tunnel (9) coincides with the cross section of the curved section (12), so that the curved section (12) forms an extension of the central tunnel (9) and the rear end of the tunnel element (10) converges into the vertical section (7) of the reinforcing profile (4), and a saddle (17) is formed in the tunnel element (10) between the curved section (12) of the tunnel element (10) and the vertical section (7) of the reinforcing profile.

3. A platform system according to claim 2, **characterized in that** the closing wall (3) comprises a cut-out (22), into which the curved section (12) of the tunnel element (10) is fitted.

4. A platform system according to claim 3, **characterized in that** the reinforcing profile (4) consists of at least two parts, with a first part being formed by the tunnel element (10) which consists of the curved section (12) and a flank of the saddle (17).

5. A platform system according to claim 4, **characterized in that** the section of the reinforcing profile (4) which is not formed by the tunnel element (10) is composed of two profile elements (11a, 11b) which are substantially mirrorsymmetrical to the longitudinal axis of the body floor.

6. A platform system according to claim 2, **characterized in that** the front base plate (1) comprises a middle tunnel (9) and the extended section (8) is provided with a tunnel element (10) comprising a curved section (12), the cross section of the central tunnel (9) coincides with the cross section of the curved section (10), so that the curved section (12) forms an extension of the central tunnel (9), and the curved section (12) of the tunnel element (10) has a U-shaped cross section which is placed against the closing wall (3), with a partial section of the closing wall (3) covering the upper part of the cross-sectional area of the curved section (12).

7. A platform system according to claim 6, **characterized in that** the tunnel element (10) is arranged as a single part and has a cross section which remains substantially constant over its length and is provided with flanges at its rear end which are placed against the closing wall (3).

8. A platform system according to claim 7, **characterized in that** the reinforcing box (5) has a closed cross section in an imaginary extension of the central tunnel, with the bottom region of the box covering the upper part of the cross-sectional area of the curved section (12).

9. A platform system according to claim 8, **characterized in that** the vertical section (7) has a U-shaped recess (16') in an imaginary extension of the central tunnel, which recess is fitted into a respective cutout (24) in the closing wall (3).

## Revendications

1. Système de plate-forme pour des véhicules ayant un empattement différent et présentant chacun un plancher de carrosserie, qui possède pour chaque véhicule des panneaux de plancher avant et arrière (1, 2) sensiblement identiques, le panneau de plancher arrière étant plus haut que le panneau avant et une paroi de fermeture (3) approximativement verticale se raccordant d'un seul tenant au panneau de plancher arrière (2) pour combler la lacune entre les panneaux (1, 2) **caractérisé en ce qu'**un profilé de renfort (4) en forme de L s'étendant transversalement est prévu en dessous du panneau de plancher arrière (2) avec une partie verticale (7) sensiblement parallèle à la paroi de fermeture (3) et une partie horizontale (6),
le profilé de renfort (4) étant relié au panneau de plancher arrière (2) et à la paroi de fermeture (3) de manière à former un caisson de renfort (5) qui s'étend dans le sens transversal du véhicule,
la partie horizontale (6) étant suivie d'une partie de prolongement (8) qui dépasse de la paroi de fermeture (3) vers l'avant et qui est reliée au panneau de plancher avant (1) le long de son bord antérieur (21),
la ligne de liaison passant à distance de la paroi de fermeture (3),
et **en ce que** la partie de prolongement (8) du profilé du renfort (4) est adaptée, en ce qui concerne son extension mesurée dans le sens longitudinal, à l'empattement du véhicule en question.

2. Système de plate-forme selon la revendication 1, **caractérisé en ce que** le panneau de plancher avant (1) présente un tunnel central (9) et la partie de prolongement (8) est munie d'un élément de tunnel (10) présentant une partie en arc de cercle (12),
la section du tunnel central (9) coïncide avec la section de la partie en arc de cercle (12), de sorte que la partie en arc de cercle (12) forme une prolongation du tunnel central (9) et la fermeture de l'élément de tunnel (10) sur l'arrière se raccorde à la partie verticale (7) du profilé de renfort (4), et
il est prévu entre la partie en arc de cercle (12) de l'élément de tunnel (10) et la partie verticale (7) du profilé de renfort une selle (17) dans l'élément de tunnel (10).

3. Système de plate-forme selon la revendication 2, **caractérisé en ce que** la paroi de fermeture (3) présente une découpe (22) dans laquelle la partie en arc de cercle (12) de l'élément de tunnel (10) est adaptée.

4. Système de plate-forme selon la revendication 3, **caractérisé en ce que** le profilé de renfort (4) se compose d'au moins deux parties, une première partie étant formée par l'élément de tunnel (10), qui se compose de la partie en arc de cercle (12) et d'un flanc de la selle (17).

5. Système de plate-forme selon la revendication 4, **caractérisé en ce que** la partie du profilé de renfort (4) qui n'est pas formée par l'élément de tunnel (10) est composée de deux éléments profilés (11a, 11b) sensiblement symétriques en miroir par rapport à l'axe longitudinal du plancher de carrosserie.

6. Système de plate-forme selon la revendication 2, **caractérisé en ce que** le panneau de plancher avant (1) présente un tunnel central (9) et la partie de prolongement (8) est munie d'un élément de tunnel (10) présentant une partie en arc de cercle (12),
la section du tunnel central (9) coïncide avec la section de la partie en arc de cercle (10), de sorte que la partie en arc de cercle (12) forme un prolongement du tunnel central (9), et
la partie en arc de cercle (12) de l'élément de tunnel (10) présente une section en forme de U qui est posée contre la paroi de fermeture (3), une partie de la paroi de fermeture (3) recouvrant la partie supérieure de l'aire de section de la partie en arc de cercle (12).

7. Système de plate-forme selon la revendication 6, **caractérisé en ce que** l'élément de tunnel (10) est formé comme une pièce séparée et présente une section sensiblement constante sur sa longueur et est muni à son extrémité arrière de brides qui sont posées contre la paroi de fermeture (3).

8. Système de plate-forme selon la revendication 7, **caractérisé en ce que** le caisson de renfort (5) présente, dans un prolongement imaginaire du tunnel central, une section fermée, la partie inférieure du caisson recouvrant la partie supérieure de l'aire de section de la partie en arc de cercle (12).

9. Système de plate-forme selon la revendication 8, **caractérisé en ce que** la partie verticale (7) présente, dans un prolongement imaginaire du tunnel central, une ouverture en forme de U (16') qui est adaptée dans une découpe (24) correspondante de la paroi de fermeture (3).
